# EUROPEAN PATENT APPLICATION

(11) **EP 4 818 877 A1**
(43) Date of publication of application: **07.10.2026**
(21) Application number: 25205184.2
(22) Date of filing: 29.09.2025
(51) Int. Cl.: G06F 3/06

(54) **RESOURCE SCHEDULING METHOD BASED ON ELASTIC BLOCK STORAGE SERVICE, DEVICE, AND STORAGE MEDIUM**

(30) Priority: 31.03.2025 CN 202510399811
(71) Applicant: Beijing Volcano Engine Technology Co., Ltd., Beijing 100190 (CN)
(72) Inventor: ZHAN, Guoli, Beijing, 100028 (CN); DENG, Zhenkai, Beijing, 100028 (CN); SHEN, Haijia, Beijing, 100028 (CN); ZHAO, Pengwei, Beijing, 100028 (CN)
(74) Representative: Isarpatent

(57) **Abstract**

A resource scheduling method based on an elastic block storage service, a device, and a storage medium are provided. In the method, a candidate cloud disk behavior label set of a target tenant is generated based on attribute information and operation event information of each cloud disk of the target tenant in a tenant set (S202); a current weight of each candidate cloud disk behavior label in the candidate cloud disk behavior label set is determined based on a cloud disk behavior change of the target tenant and cloud disk behavior changes of the other tenants in the tenant set, and a target cloud disk behavior label of the target tenant is determined from the candidate cloud disk behavior label set based on the current weight of each candidate cloud disk behavior label; labeled feature information of the target tenant is generated based on the target cloud disk behavior label (S203); and a cloud disk of the target tenant is scheduled based on the labeled feature information of the target tenant (S204).

## Description

### TECHNICAL FIELD

Embodiments of the present disclosure relate to the field of computer and network communication technologies, and in particular, to a resource scheduling method based on an elastic block storage service, a device, and a storage medium.

### BACKGROUND

In a traditional elastic block storage service scenario provided by a cloud vendor, resource scheduling focuses more on a load model at a cluster level, and load management of a single resource is performed based on overall load of a cluster and real-time load of resources, to implement resource scheduling. However, resource scheduling capability of the traditional elastic block storage service for a specific tenant needs to be further improved.

### SUMMARY

Embodiments of the present disclosure provide a resource scheduling method based on an elastic block storage service, a device and a storage medium, to improve resource scheduling capability of the elastic block storage service.

An embodiment of the present disclosure provides a resource scheduling method based on an elastic block storage service. The method includes:
acquiring attribute information and operation event information of each cloud disk of a target tenant (e.g. first tenant) in a tenant set;
generating a candidate cloud disk behavior label set of the target tenant based on the attribute information and the operation event information of each cloud disk;
determining a current weight of each candidate cloud disk behavior label in the candidate cloud disk behavior label set based on cloud disk behavior change of the target tenant and cloud disk behavior changes of the other tenants in the tenant set other than the target tenant (e.g. other tenants in the tenant set other than the first tenant), and determining a target cloud disk behavior label (e.g. first cloud disk behavior label) of the target tenant from the candidate cloud disk behavior label set based on the current weight of each candidate cloud disk behavior label; generating labeled feature information of the target tenant based on the target cloud disk behavior label; and
scheduling a cloud disk of the target tenant based on the labeled feature information of the target tenant.

An embodiment of the present disclosure provides a resource scheduling device based on an elastic block storage service. The device includes:
an acquisition unit configured to acquire attribute information and operation event information of each cloud disk of a target tenant in a tenant set;
a label generation unit configured to generate a candidate cloud disk behavior label set of the target tenant based on the attribute information and the operation event information of each cloud disk; and determine a current weight of each candidate cloud disk behavior label in the candidate cloud disk behavior label set based on a cloud disk behavior change of the target tenant and cloud disk behavior changes of the other tenants in the tenant set, and determine a target cloud disk behavior label of the target tenant from the candidate cloud disk behavior label set based on the current weight of each candidate cloud disk behavior label;
a feature information generation unit configured to generate labeled feature information of the target tenant based on the target cloud disk behavior label; and
a scheduling unit configured to schedule a cloud disk of the target tenant based on the labeled feature information of the target tenant.

An embodiment of the present disclosure provides an electronic device. The electronic device includes at least one processor and at least one memory.

The at least one memory stores a computer-executable instruction.

The at least one processor executes the computer-executable instruction stored in the at least one memory, to enable the at least one processor to perform the resource scheduling method based on an elastic block storage service according to at least one of the above embodiments.

An embodiment of the present disclosure provides a non-transitory computer-readable storage medium. The non-transitory computer-readable storage medium stores a computer-executable instruction. When the computer-executable instruction is executed by a processor, the resource scheduling method based on an elastic block storage service according to at least one of the above embodiments is implemented.

An embodiment of the present disclosure provides a computer program product, including a computer program. When the computer program is executed by a processor, the resource scheduling method based on an elastic block storage service according to at least one of the above embodiments is implemented.

### BRIEF DESCRIPTION OF DRAWINGS

To describe the technical solutions in the embodiments of the present disclosure more clearly, the following briefly introduces drawings required for describing the embodiments. Apparently, the drawings in the following description show some embodiments of the present disclosure, and other drawings may also be obtained by a person of ordinary skill in the art according to these drawings without creative efforts.
Fig. 1 is a schematic diagram of a scenario of resource scheduling based on an elastic block storage service according to an embodiment of the present disclosure;
Fig. 2 is a schematic flowchart of a resource scheduling method based on an elastic block storage service according to an embodiment of the present disclosure;
Fig. 3 is a schematic flowchart of a resource scheduling method based on an elastic block storage service according to another embodiment of the present disclosure;
Fig. 4 is a block diagram of a resource scheduling device based on an elastic block storage service according to an embodiment of the present disclosure; and
Fig. 5 is a schematic diagram of a hardware structure of a resource scheduling device based on an elastic block storage service according to an embodiment of the present disclosure.

### DETAILED DESCRIPTION

To make objectives, technical solutions, and advantages of embodiments of the present disclosure clearer, the following clearly and completely describes the technical solutions in the embodiments of the present disclosure with reference to the drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

A tenant portrait is an abstract description of a feature of a specific tenant, and is usually based on data analysis and machine learning technologies. It may help a service provider analyze requirements and behavioral patterns of the tenant, to provide more accurate service recommendations. In addition, tenant behavior may be predicted based on the tenant portrait, to provide decision suggestions for service resource coordination among a plurality of tenants. Currently, tenant portraits are widely used in toc fields such as e-commerce and advertisement delivery. However, because of factors such as data complexity and dispersion and a data magnitude of a single tenant, tenant portraits are not commonly used in the storage field.

In a traditional elastic block storage service scenario provided by a cloud vendor, resource scheduling focuses more on a load model at a cluster level, and load management of a single resource is performed based on overall load of a cluster and real-time load of resources, to implement resource scheduling. However, currently, a tenant portrait technology is not used in the traditional elastic block storage service, and resource scheduling capability for a specific tenant needs to be further improved.

To solve the above technical problem, an embodiment of the present disclosure provides a resource scheduling method based on an elastic block storage service. In the method, attribute information and operation event information of each cloud disk of a target tenant in a tenant set are acquired; a candidate cloud disk behavior label set of the target tenant is generated based on the attribute information and the operation event information of each cloud disk; a current weight of each candidate cloud disk behavior label in the candidate cloud disk behavior label set is determined based on a cloud disk behavior change of the target tenant and cloud disk behavior changes of the other tenants in the tenant set, and a target cloud disk behavior label of the target tenant is determined from the candidate cloud disk behavior label set based on the current weight of each candidate cloud disk behavior label; labeled feature information of the target tenant is generated based on the target cloud disk behavior label; and a cloud disk of the target tenant is scheduled based on the labeled feature information of the target tenant. Statistical analysis and mining are performed on the attribute information and the operation event information of each cloud disk of the target tenant, so that a multi-dimensional target cloud disk behavior label can be accurately marked for the target tenant. The target cloud disk behavior label of the target tenant is dynamically adjusted based on a cloud disk behavior change of the target tenant and cloud disk behavior changes of the other tenants in the tenant set, so that tenant labeled feature information can be accurately generated for resource scheduling of the elastic block storage service, to improve resource scheduling capability.

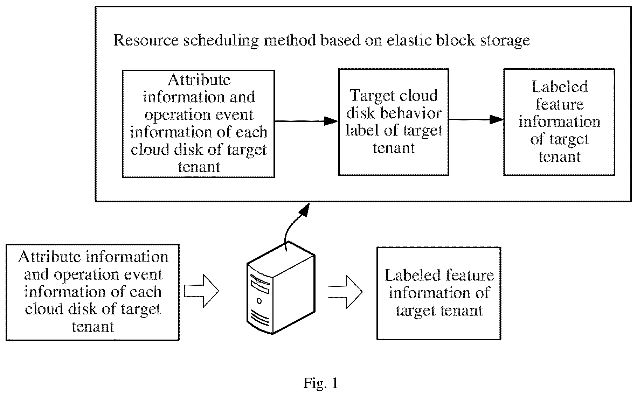

Fig. 1 shows an application scenario of a resource scheduling method based on an elastic block storage service according to an embodiment of the present disclosure. In the method, attribute information and operation event information of each cloud disk of a target tenant are acquired; a candidate cloud disk behavior label set of the target tenant is generated based on the attribute information and the operation event information of each cloud disk; a current weight of each candidate cloud disk behavior label in the candidate cloud disk behavior label set is determined based on a cloud disk behavior change of the target tenant and cloud disk behavior changes of the other tenants in the tenant set, and a target cloud disk behavior label of the target tenant is determined from the candidate cloud disk behavior label set based on the current weight of each candidate cloud disk behavior label; labeled feature information of the target tenant is generated based on the target cloud disk behavior label; and a cloud disk of the target tenant is scheduled based on the labeled feature information of the target tenant.

It may be understood that data involved in the technical solution (including but not limited to the data itself, acquisition, use, storage, or deletion of the data) shall comply with requirements of corresponding laws, regulations, and related provisions.

It may be understood that before the technical solutions disclosed in the embodiments of the present disclosure are used, a related user shall be informed of the type, the scope of use, the use scenario, and the like of information involved in the present disclosure in an appropriate manner according to related laws and regulations, and the authorization of the related user shall be obtained. The related user may include any type of rights subjects, such as an individual, an enterprise, and a group.

For example, in response to an active request of a user being received, prompt information is sent to the related user, to clearly prompt the related user that the requested operation will need to obtain and use information of the related user, so that the related user may independently choose, based on the prompt information, whether to provide the information to software or hardware, such as an electronic device, an application, a server, or a storage medium, that performs the operations of the technical solution of the present disclosure.

As an optional but non-restrictive implementation, in response to receiving the active request of the related user, the prompt information may be sent to the related user in the form of, for example, a pop-up window, and the prompt information may be presented in text in the pop-up window. In addition, the pop-up window may further include a selection control for the user to choose whether to "agree" or "disagree" to provide the information to the electronic device.

It may be understood that the above process of notifying and obtaining user authorization is merely exemplary, and does not limit the implementations of the present disclosure. Other manners that satisfy the related laws and regulations may also be used in the implementations of the present disclosure.

Enabling of related functions, obtained data, a data processing manner, a data storage manner, and the like in the embodiments of the present disclosure shall be authorized in advance by the user and other rights subjects associated with the user, and shall comply with the related laws, regulations, and agreements and rules between the rights subjects.

The following describes in detail the resource scheduling method based on an elastic block storage service according to the present disclosure with reference to specific embodiments.

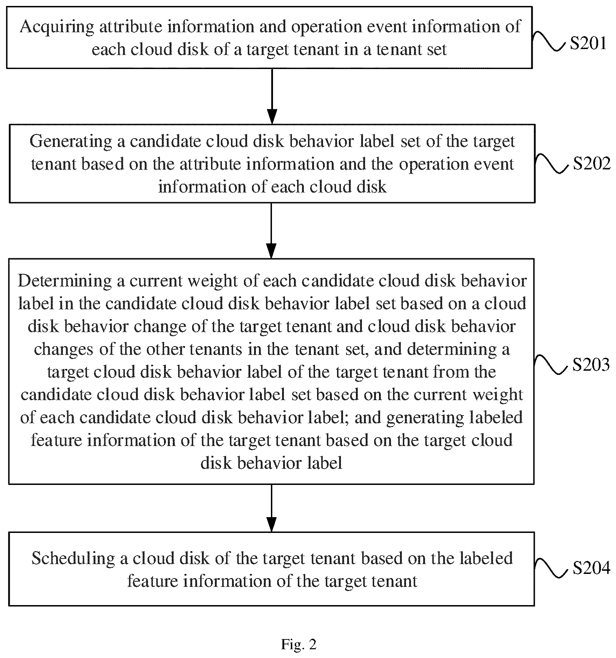

Fig. 2 is a schematic flowchart of a resource scheduling method based on an elastic block storage service according to an embodiment of the present disclosure. The method in this embodiment may be used in an electronic device such as a terminal device or a server. The resource scheduling method based on an elastic block storage service includes the following steps.

S201: acquiring attribute information and operation event information of each cloud disk of a target tenant in a tenant set.

In this embodiment, for any target tenant that rents a cloud disk (Block Device) of an elastic block storage service, the attribute information and the operation event information of each cloud disk of the target tenant may be collected.

The attribute information of any cloud disk includes but is not limited to a configuration-type attribute and a behavioral pattern-type attribute. The configuration-type attribute includes but is not limited to a specification, a capacity, a lifecycle, or the like of the cloud disk, and may be acquired from a database, such as a service management and control database, that stores the configuration-type attribute. The behavioral pattern-type attribute includes but is not limited to traffic, qps, a data compression ratio, or the like of the cloud disk, and may be acquired from a database, such as a cloud disk monitoring database, that stores the behavioral pattern-type attribute.

The operation event information of any cloud disk may include but is not limited to a creation event, a configuration change event, or the like, and may be acquired from log data. Based on the operation event information of any cloud disk, an operation performed by the target tenant on the cloud disk, for example, a number of batch creation times of cloud disks, a number of configuration change times, or the like, may be statistically obtained.

Optionally, the attribute information and the operation event information of each cloud disk of the target tenant may be stored in a data warehouse as basic data support for subsequent processing, and then the data warehouse is periodically polled to read the attribute information and the operation event information of each cloud disk of the target tenant for subsequent processing.

Optionally, after the attribute information and the operation event information of each cloud disk of the target tenant are obtained, data cleaning and filtering may be further performed to filter out abnormal data.

S202: generating a candidate cloud disk behavior label set of the target tenant based on the attribute information and the operation event information of each cloud disk.

In this embodiment, based on the attribute information and the operation event information of each cloud disk, operations such as statistical analysis, mining, and prediction may be performed on the attribute information and the operation event information of each cloud disk by using various feasible algorithms, generating multi-dimensional candidate cloud disk behavior labels of the target tenant, to constitute the candidate cloud disk behavior label set, as a basis for constructing the labeled feature information of the target tenant.

Optionally, in this embodiment, a tenant feature label of the target tenant may be directly generated based on the attribute information and the operation event information of each cloud disk. Alternatively, optionally, a single-cloud-disk behavior label of each cloud disk may be directly obtained based on the attribute information and the operation event information of each cloud disk, and the single-cloud-disk behavior labels are further summarized, to obtain a multi-cloud-disk behavior label of the target tenant. Further, the tenant feature label and the multi-cloud-disk behavior label of the target tenant may be determined as tenant labels of the target tenant.

In this embodiment, based on the attribute information and the operation event information of each cloud disk, a single-cloud-disk behavior label of each cloud disk may be generated. For example, the single-cloud-disk behavior label may be a capacity, a lifecycle, a compression ratio, a usage rate, performance, an average write size over the last 7 days, an average read size over the last 7 days, a throttling time over the last 7 days, an average morning IOPS over the last 7 days, an average evening IOPS over the last 7 days, an average morning bandwidth over the last 7 days, an average evening bandwidth over the last 7 days, or traffic prediction in the next 24 hours. A multi-cloud-disk behavior label may be obtained by summarizing single-cloud-disk behavior labels. For example, the multi-cloud-disk behavior label may be an average capacity, an average lifecycle, an average compression ratio, an average usage rate, average performance, an average write size over the last 7 days, an average read size over the last 7 days, a throttling time over the last 7 days, an average morning IOPS over the last 7 days, an average evening IOPS over the last 7 days, an average morning bandwidth over the last 7 days, an average evening bandwidth over the last 7 days, or traffic prediction in the next 24 hours, across all cloud disks of the target tenant. The tenant feature label of the target tenant may be generated based on the attribute information and the operation event information of each cloud disk. The tenant feature label is a label that is not obtained by summarizing and inducing the single-cloud-disk behavior label. For example, the tenant feature label may be affinity, anti-affinity, a cloud disk activation type, a number of cloud disks, a user level, a number of created cloud disks over the last 7 days, a number of deleted cloud disks over the last 7 days, or a number of batch creation times of cloud disks over the last 7 days.

Certainly, in this embodiment, generating the candidate cloud disk behavior label set of the target tenant based on the attribute information and the operation event information of each cloud disk is not limited to the foregoing manner, and any other feasible manner, for example, directly generating the candidate cloud disk behavior label set by using a machine learning model, may be used. This is not limited in this embodiment.

S203: determining a current weight of each candidate cloud disk behavior label in the candidate cloud disk behavior label set based on a cloud disk behavior change of the target tenant and cloud disk behavior changes of the other tenants in the tenant set, and determining a target cloud disk behavior label of the target tenant from the candidate cloud disk behavior label set based on the current weight of each candidate cloud disk behavior label; and generating labeled feature information of the target tenant based on the target cloud disk behavior label.

In this embodiment, after the candidate cloud disk behavior label set of the target tenant is obtained, some or all candidate cloud disk behavior labels may be selected from the candidate cloud disk behavior label set and determined as the target cloud disk behavior label of the target tenant. Based on the target cloud disk behavior label, the labeled feature information of the target tenant (an abstract description of the feature of the target tenant) is generated. This may be implemented in any feasible manner. For example, the labeled feature information close to a natural language may be obtained by describing the target cloud disk behavior label. For example, in response to the target cloud disk behavior label of the target tenant including a large-capacity label and a low-bandwidth label, label descriptions "large capacity, low bandwidth" of the large-capacity label and the low-bandwidth label may be acquired as the labeled feature information of the target tenant. A manner of acquiring the label description may be implemented by using a language model. Alternatively, in this embodiment, the tenant labels may be directly used as the labeled feature information.

However, considering the cloud disk behavior change of the target tenant and the cloud disk behavior changes of the cloud disk behavior changes of the other tenants in the tenant set, representativeness of some candidate cloud disk behavior labels in the candidate cloud disk behavior label set for the target tenant also changes. For example, some candidate cloud disk behavior labels are generated for the target tenant in the past long time, but behavioral habits of the target tenant may change, and these candidate cloud disk behavior labels may not accurately reflect the recent cloud disk behavior feature of the target tenant. For another example, some candidate cloud disk behavior labels reflect some relative logic, such as high capacity and large bandwidth. Whether a cloud disk of the target tenant is defined as high capacity depends not only on an absolute size of the cloud disk, but also on cloud disk sizes of the tenants in the entire system. In response to the cloud disk sizes of the other tenants becoming larger, the cloud disk of the target tenant may no longer be defined as high capacity. Therefore, in this embodiment, the current weight of each candidate cloud disk behavior label in the candidate cloud disk behavior label set is determined based on the cloud disk behavior change of the target tenant and the cloud disk behavior changes of the other tenants in the tenant set. Specifically, the current weight of one or more candidate cloud disk behavior labels may be increased or decreased based on different cloud disk behavior change trends. Further, the target cloud disk behavior label of the target tenant may be dynamically determined from the candidate cloud disk behavior label set based on the current weight of each candidate cloud disk behavior label, and the labeled feature information of the target tenant is generated based on the target cloud disk behavior label. Therefore, the labeled feature information of the target tenant is more accurate and more timely, and may reflect current feature of the target tenant.

The current weight of the candidate cloud disk behavior label may be determined by using any feasible method. For example, a preset initial weight of any candidate cloud disk behavior label may be acquired, and then the preset initial weight is updated based on the cloud disk behavior change of the target tenant and the cloud disk behavior changes of the other tenants in the tenant set. Alternatively, the current weight of each candidate cloud disk behavior label may be directly set based on the cloud disk behavior change of the target tenant and the cloud disk behavior changes of the other tenants in the tenant set. Alternatively, another method may be used. This is not limited in this embodiment. In addition, determining the target cloud disk behavior label of the target tenant from the candidate cloud disk behavior label set based on the current weight of each candidate cloud disk behavior label may be implemented by selecting, based on the size of the current weight, a plurality of (TopN, where N is a preset integer) candidate cloud disk behavior labels with the largest current weight as the target cloud disk behavior label of the target tenant, or another determination rule may be used.

S204: scheduling a cloud disk of the target tenant based on the labeled feature information of the target tenant.

In this embodiment, after the labeled feature information of the target tenant is obtained, the labeled feature information of the target tenant may be used in subsequent cloud disk scheduling.

For example, service traffic may be accurately predicted based on the labeled feature information of the target tenant, and a cluster risk may be perceived in advance. Specifically, based on large-traffic-related data in a cloud disk prediction-type label, it may be perceived in advance that the cluster may have a traffic risk at a specific time in the future, and some cloud disks are migrated out in time to ensure service stability.

The cloud disk specification may be accurately recommended based on the labeled feature information of the target tenant. Specifically, statistical analysis is performed on labels such as an average capacity, average bandwidth, and an average number of throttling times per day of the cloud disk of the target tenant, to reflect whether a current specification of the cloud disk matches a requirement of the target tenant, and accurately recommend a cloud disk specification that matches the requirement of the target tenant.

The usage state of the target tenant may be perceived based on the labeled feature information of the target tenant, and disk creation clusters may be reasonably dispersed. Specifically, based on labels such as high or low capacity and high or low traffic of the target tenant, storage pool resources are reasonably allocated when a cloud disk is created, resource allocation for a tenant with a high-capacity and/or hightraffic label is emphasized, and resource allocation for a tenant with a low-capacity and/or low-traffic label is relatively ignored.

A change in a behavior pattern of the target tenant may be perceived based on the labeled feature information of the target tenant. Specifically, a time cooling algorithm is used to place more emphasis on recent behavior of the target tenant, so that when the behavior of the target tenant changes, the change may be quickly perceived and the label is modified.

According to the resource scheduling method based on an elastic block storage service provided in this embodiment, attribute information and operation event information of each cloud disk of a target tenant in a tenant set are acquired; a candidate cloud disk behavior label set of the target tenant is generated based on the attribute information and the operation event information of each cloud disk; a current weight of each candidate cloud disk behavior label in the candidate cloud disk behavior label set is determined based on a cloud disk behavior change of the target tenant and cloud disk behavior changes of the other tenants in the tenant set, and a target cloud disk behavior label of the target tenant is determined from the candidate cloud disk behavior label set based on the current weight of each candidate cloud disk behavior label; labeled feature information of the target tenant is generated based on the target cloud disk behavior label; and a cloud disk of the target tenant is scheduled based on the labeled feature information of the target tenant. Statistical analysis and mining are performed on the attribute information and the operation event information of each cloud disk of the target tenant, so that a multi-dimensional target cloud disk behavior label can be accurately marked for the target tenant. The target cloud disk behavior label of the target tenant is dynamically adjusted based on the cloud disk behavior change of the target tenant and the cloud disk behavior changes of the other tenants in the tenant set, so that tenant labeled feature information can be accurately generated for resource scheduling of the elastic block storage service, to improve resource scheduling capability.

In any one of the foregoing embodiments, when the candidate cloud disk behavior label set of the target tenant is generated based on the attribute information and the operation event information of each cloud disk, different means such as statistical analysis, mining, and prediction may be used. Therefore, the candidate cloud disk behavior labels may be classified into statistics-type labels, mining-type labels, and prediction-type labels. The single-cloud-disk behavior label and the tenant feature label may each be classified into a statistics-type label, a mining-type label, and a prediction-type label.

In the foregoing embodiment, when the candidate cloud disk behavior label set of the target tenant is generated based on the attribute information and the operation event information of each cloud disk, different manners may be used for the statistics-type labels, the rule-type labels, and the prediction-type labels. Specifically, the manners are as follows.

Optionally, for the statistics-type labels, a cumulative amount of a preset cloud disk behavior indicator of each cloud disk within a target time window (e.g. first time window) is acquired based on the attribute information and/or the operation event information of each cloud disk, and a single-cloud-disk behavior label corresponding to each cloud disk is determined based on the cumulative amount of the preset cloud disk behavior indicator; and/or
a cumulative amount of a preset tenant characteristic indicator of the target tenant within a target time window is acquired based on the attribute information and/or the operation event information of all the cloud disks of the target tenant, and the tenant feature label of the target tenant is determined based on the cumulative amount of the preset tenant characteristic indicator.

In this embodiment, for a statistics-type single-cloud-disk behavior label, the cumulative amount of the preset cloud disk behavior indicator of each cloud disk within the target time window (for example, the last 7 days) may be acquired, and the single-cloud-disk behavior label of each cloud disk is determined based on the cumulative amount of the preset cloud disk behavior indicator. For example, the average write size over the last 7 days may be obtained by statistically analyzing a cumulative amount of written data of each cloud disk over the last 7 days and then averaging the cumulative amount. In addition, for example, a related single-cloud-disk behavior label such as a resource lifecycle, a throttling condition, or time-sharing data of each cloud disk may also be determined by using a statistical method. The resource lifecycle may be used to reasonably schedule cloud disks with different resource lifecycles in the cloud disk scheduling process. The throttling condition may be used to allocate a cluster that meets a bandwidth requirement during cloud disk scheduling. The time-sharing data may be used to balance resources between clusters based on tenant tides during cloud disk scheduling.

Similarly, for a statistics-type tenant feature label, the cumulative amount of the preset tenant characteristic indicator of the target tenant within the target time window (for example, the last 7 days) may be acquired, and the tenant feature label of the target tenant is determined based on the cumulative amount of the preset tenant characteristic indicator. For example, the number of created cloud disks over the last 7 days may be obtained by statistically analyzing a cumulative number of created cloud disks of the target tenant over the last 7 days. The number of batch creation times of cloud disks over the last 7 days may be obtained by determining, based on the time of creation of the cloud disks over the last 7 days, whether there is batch creation of cloud disks, and accumulating the number of batch creation times of cloud disks.

Optionally, for the rule-type labels, it is determined whether the attribute information and/or the operation event information of a first cloud disk among all cloud disks of the target tenant meet a first preset rule corresponding to a single-cloud-disk behavior label, and in response to meeting the first preset rule, the single-cloud-disk behavior label is generated for the first cloud disk (the first cloud disk is any cloud disk among all cloud disks of the target tenant); and/or

it is determined whether the attribute information and/or the operation event information of all the cloud disks of the target tenant meet a second preset rule corresponding to a tenant feature label, and in response to meeting the second preset rule, the tenant feature label is generated for the target tenant.

In this embodiment, a corresponding discrimination rule, namely, the first preset rule, may be configured for one or more single-cloud-disk behavior labels, for example, a rule for determining a high or low level of the cloud disk usage rate, a rule for determining a size level of the average write size of the cloud disk over the last 7 days, or a rule for determining a size level of the average morning bandwidth over the last 7 days. The level of the foregoing rule indicator of the cloud disk may be determined based on the foregoing rules, to obtain a single-cloud-disk behavior label of a corresponding level, for example, a usage rate level label (which may be divided into high, medium, and low levels, etc.), an average write size level label over the last 7 days (which may be divided into high, medium, and low levels, etc.), or the like.

Similarly, a corresponding discrimination rule, namely, the second preset rule, may be configured for one or more tenant feature labels, for example, a rule for determining a size level of the number of batch creation times of cloud disks over the last 7 days, a rule for determining a size level of a frequency of batch creation of cloud disks over the last 7 days, or a rule for determining a size level of the usage rate. The level of the foregoing rule indicator of the target tenant may be determined based on the foregoing rules, to obtain a tenant feature label of a corresponding level, for example, a label of the number of batch creation times of cloud disks over the last 7 days (which may be divided into high, medium, and low levels, etc.), a label of a size level of the frequency of batch creation of cloud disks over the last 7 days (which may be divided into high, medium, and low levels, etc.), or the like.

Optionally, for the prediction-type labels, historical data of a to-be-predicted cloud disk behavior indicator of each cloud disk within a historical time window is acquired based on the attribute information and/or the operation event information of each cloud disk, a prediction model is invoked based on time-series historical data of the to-be-predicted cloud disk behavior indicator, a predicted value of the to-be-predicted cloud disk behavior indicator is acquired, and a single-cloud-disk behavior label of each cloud disk is determined based on the predicted value of the to-be-predicted cloud disk behavior indicator; and/or

historical data of a to-be-predicted tenant characteristic indicator of the target tenant within a historical time window is acquired based on the attribute information and/or the operation event information of all the cloud disks of the target tenant, a prediction model is invoked based on the historical data of the to-be-predicted tenant characteristic indicator, a predicted value of the to-be-predicted tenant characteristic indicator is acquired, and the tenant feature label of the target tenant is determined based on the predicted value of the to-be-predicted tenant characteristic indicator.

In this embodiment, the to-be-predicted cloud disk behavior indicator may be predicted for each cloud disk. The historical data of the to-be-predicted cloud disk behavior indicator of each cloud disk within the target time window may be acquired. The prediction model may be invoked based on the historical data of the to-be-predicted cloud disk behavior indicator, and the predicted value of the to-be-predicted cloud disk behavior indicator is acquired by the prediction model. The prediction model may be any machine learning model, for example, a long short-term memory (LSTM) network. Further, the single-cloud-disk behavior label of each cloud disk may be determined based on the predicted value of the to-be-predicted cloud disk behavior indicator. For example, to predict traffic of each cloud disk in the next 24 hours, a time series of the traffic of each cloud disk over the past 7 days may be acquired, and the traffic in the next 24 hours is predicted by the LSTM model, as a single-cloud-disk behavior label. The LSTM, as an optimization algorithm of a recurrent neural network (RNN), can well capture a long-term dependence relationship and predict a future situation.

Similarly, the to-be-predicted tenant characteristic indicator may be predicted for the target tenant. The historical data of the to-be-predicted tenant characteristic indicator of the target tenant within the target time window may be acquired. The prediction model may be invoked based on the historical data of the to-be-predicted tenant characteristic indicator, and the predicted value of the to-be-predicted tenant characteristic indicator is acquired by the prediction model. Further, one tenant label may be determined based on the predicted value of the to-be-predicted tenant characteristic indicator. For example, to predict the number of API invocations of the target tenant in the next 24 hours, a time series of the number of API invocations of the target tenant over the past 7 days may be acquired, and the number of API invocations in the next 24 hours is predicted by the LSTM model, as one tenant label. For another example, to predict a time when the target tenant performs batch creation of cloud disks in the future, the time when the target tenant performs batch creation of cloud disks over the past 7 days may be acquired, and the time when the target tenant performs batch creation of cloud disks in the future is predicted by the LSTM model. The to-be-predicted cloud disk behavior indicator and the to-be-predicted tenant characteristic indicator may be the same type of indicators as the cloud disk behavior indicator and the tenant characteristic indicator mentioned in the foregoing embodiment, except that they represent the predicted values of these indicators in the future time need to be predicted. Alternatively, the to-be-predicted cloud disk behavior indicator and the to-be-predicted tenant characteristic indicator may be different types of indicators from the cloud disk behavior indicator and the tenant characteristic indicator mentioned in the foregoing embodiment.

Further, on the basis of the prediction model, actual data may be compared, a difference between the predicted data and the actual data is determined, and a prediction parameter coefficient is adjusted to adaptively optimize the prediction model.

In addition, considering that for the foregoing rule-type labels, the foregoing first preset rule and/or the second preset rule are rules for determining a level, that is, determining whether a related rule indicator exceeds a corresponding preset indicator threshold. To improve label accuracy and adaptive optimization capability, the preset indicator thresholds may be dynamically adjusted. Specifically, an adjustment amount of the preset indicator threshold is determined based on a total resource amount, a used resource amount, and a predicted resource usage amount of the cluster to which the cloud disk of the target tenant belongs, and the preset indicator threshold is adjusted based on the adjustment amount.

In this embodiment, for the rule-type labels, such as scheduling weight labels like the bandwidth and capacity usage of the tenant, in addition to comparing each rule indicator related to all the resources of the tenant with a corresponding rule indicator threshold, it is also necessary to consider a water level change of each resource in the cluster. Taking a capacity usage level as an example, it is assumed that a preset single-disk capacity of less than 100 GB is referred to as low capacity, and a preset single-disk capacity of less than 400 GB is referred to as medium capacity. The rest is high capacity. The label threshold is combined with the resource water level, and the threshold size is dynamically adjusted to improve the label accuracy. For example, the label threshold is reduced with an increase in the resource water level, so that the label level of the corresponding resource may be increased. For example, a preset single-disk capacity of less than 80 GB may be referred to as low capacity. Originally, a single-disk capacity of 90 GB is low capacity, but now it becomes medium capacity, to improve the importance of the label.

Based on the label accuracy adaptive optimization capability described in the previous section, changes in a water level of each resource in each cluster in the next 24 hours may be statistically analyzed through capacity and traffic prediction of the tenant. The rule-type labels are also used to configure scheduling rules in a future period of time. By combining a current resource water level of the cluster and adaptive optimization-based prediction of a resource water level in the next 24 hours, the preset indicator threshold can be adjusted more accurately, and future resource scheduling can be performed more accurately. A calculation formula for the preset indicator threshold is as follows:
$currentUseRatio = \frac{{\sum }_{i = 1}^{n} {cluster}_{used}}{{\sum }_{i = 1}^{n} {cluster}_{total}}$$futureUseRatio = \frac{{\sum }_{i = 1}^{n} {cluster}_{futureUsed}}{{\sum }_{i = 1}^{n} {cluster}_{futureTotal}}$$T = {T}_{init} - \left(α∗{e}^{currentUseRatio}+β∗{e}^{futureUseRatio}\right) + γ$
where:
*Tᵢₙᵢₜ*: an initial threshold of the preset indicator threshold, which may be obtained by statistically analyzing historical data;
*cluster_{used}*: an amount of used resources in the cluster;
*clusterₜₒₜₐₗ*: a total amount of resources in the cluster;
*cluster_{futureUsed}*: a predicted value of an amount of used resources in the cluster in the future;
*cluster_{futureTotal}*: a total number of resources in the cluster in the future, which is generally equal to *clusterₜₒₜₐₗ*;
*α, β*: weight factors; and
y: an adjustment factor.

In the foregoing formula for calculating the adjusted rule indicator threshold T, a part other than *Tᵢₙᵢₜ* may be considered as the adjustment amount of the preset indicator threshold.

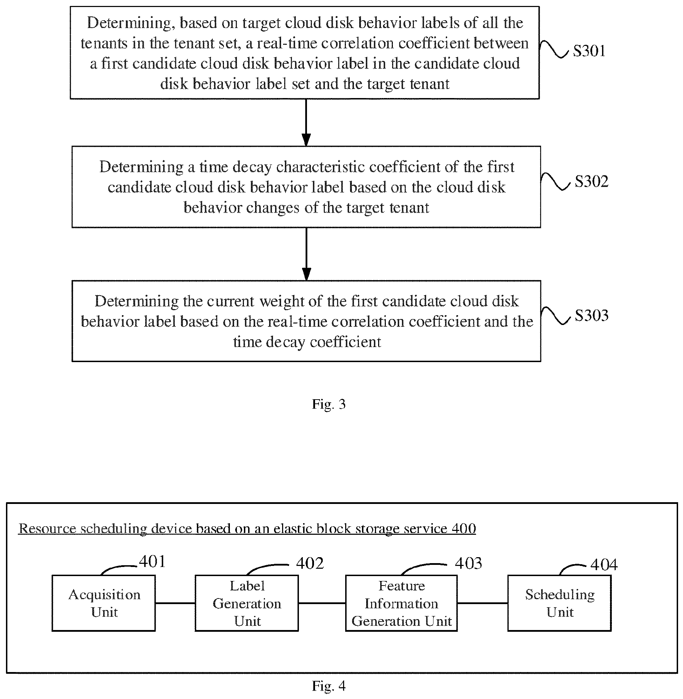

On the basis of any one of the foregoing embodiments, the determining a current weight of each candidate cloud disk behavior label in the candidate cloud disk behavior label set based on the cloud disk behavior change of the target tenant and the cloud disk behavior changes of the other tenants in the tenant set may be specifically shown in Fig. 3, and includes:
S301: determining, based on target cloud disk behavior labels of all the tenants in the tenant set, a real-time correlation coefficient between a first candidate cloud disk behavior label in the candidate cloud disk behavior label set and the target tenant;
S302: determining a time decay characteristic coefficient of the first candidate cloud disk behavior label based on the cloud disk behavior changes of the target tenant; and
S303: determining the current weight of the first candidate cloud disk behavior label based on the real-time correlation coefficient and the time decay characteristic coefficient.

The first candidate cloud disk behavior label is any candidate cloud disk behavior label in the candidate cloud disk behavior label set.

In this embodiment, for each candidate cloud disk behavior label in the candidate cloud disk behavior label set, the real-time correlation coefficient between the candidate cloud disk behavior label and the target tenant may be determined based on the target cloud disk behavior labels of all the tenants in the tenant set. The real-time correlation coefficient may be used to represent a real-time correlation between the candidate cloud disk behavior label and the target tenant, or may also be used to represent a size of representativeness of the candidate cloud disk behavior label for the target tenant. For example, when many tenants in the tenant set have the candidate cloud disk behavior label, the real-time correlation between the candidate cloud disk behavior label and the target tenant is relatively small, or the representativeness of the candidate cloud disk behavior label for the target tenant is relatively small. Therefore, the real-time correlation coefficient may be reduced.

In addition, the time decay characteristic coefficient of any candidate cloud disk behavior label may be determined based on the cloud disk behavior changes of the target tenant. The time decay characteristic coefficient is used to reflect that the size of the representativeness of the candidate cloud disk behavior label for the target tenant decays with time. The influence of the cloud disk behavior of the target tenant in the past long time on the candidate cloud disk behavior label may be weakened, and the influence of the recent cloud disk behavior of the target tenant on the candidate cloud disk behavior label may be enhanced.

Further, the current weight of the candidate cloud disk behavior label may be determined based on the real-time correlation coefficient and the time decay characteristic coefficient of the candidate cloud disk behavior label.

Specifically, the preset initial weight of the candidate cloud disk behavior label may be acquired, where the preset initial weight may be preset or may be a weight at a historical moment. Further, the preset initial weight of the candidate cloud disk behavior label may be updated based on the real-time correlation coefficient and the time decay characteristic coefficient of the candidate cloud disk behavior label, to obtain the current weight of the candidate cloud disk behavior label. During specific implementation, the current weight of the candidate cloud disk behavior label may be obtained by multiplying the preset weight by the real-time correlation coefficient and the time decay characteristic coefficient. Further, a final target single-cloud-disk behavior label may be determined based on the current weights of all the candidate cloud disk behavior labels. For example, one or more candidate cloud disk behavior labels with the highest current weight are selected as the multi-cloud-disk behavior label of the target tenant.

The real-time correlation coefficient between the target single-cloud-disk behavior label and the target tenant may represent the size of the correlation between the target single-cloud-disk behavior label and the target tenant. The real-time correlation coefficient may be acquired by using any feasible method, for example, a term frequency-inverse document frequency (TF-IDF) algorithm. By multiplying a frequency of occurrence of a candidate cloud disk behavior label of the target tenant by an inverse document frequency of the candidate cloud disk behavior label in all the tenants, a weight proportion of an indicator corresponding to a single tenant in all the tenants is obtained, and a correlation coefficient between the target tenant and the candidate cloud disk behavior label may be obtained. Specifically, the method is as follows:
determining a frequency of occurrence of the any candidate cloud disk behavior label in the candidate cloud disk behavior label set, as a term frequency of the any candidate cloud disk behavior label;
determining a reciprocal of a frequency of occurrence of the any candidate cloud disk behavior label in the target cloud disk behavior labels of all the tenants in the tenant set, as an inverse document frequency of the any candidate cloud disk behavior label; and
determining, by using the TF-IDF method, the real-time correlation coefficient between the any candidate cloud disk behavior label and the target tenant based on the term frequency and the inverse document frequency of the any candidate cloud disk behavior label.

Specifically, a calculation formula for the TF-IDF real-time correlation coefficient *W_{TF-IDF}* is as follows:
$TF \left(P, T\right) \frac{w \left(P, T\right)}{{\sum }_{{T}_{i} = tags} w \left(P, {T}_{i}\right)}$$IDF \left(P, T\right) = log \frac{{\sum }_{{P}_{j} = users} {\sum }_{{T}_{i} = tags} w \left({P}_{j}, {T}_{i}\right)}{{\sum }_{{P}_{j} = users} w \left({P}_{j}, T\right)}$${w}_{TF - IDF} = TF \left(P, T\right) ∗ IDF \left(P, T\right)$
where:
*TF*(*P^{,} T*): the term frequency of the candidate cloud disk behavior label, representing a frequency of occurrence of the candidate cloud disk behavior label in the candidate cloud disk behavior label set of the target tenant, that is, a proportion of a number of occurrences of the candidate cloud disk behavior label to the number of all the candidate cloud disk behavior labels in the candidate cloud disk behavior label set. *w(P' T)* represents the number of times a candidate cloud disk behavior label T is used to label a tenant P; and
*IDF*(*P^{,} T*): the inverse document frequency of the candidate cloud disk behavior label, representing a probability of occurrence of the candidate cloud disk behavior label in all the labels *tags* of all the tenants *users,* that is, a scarcity degree of the label T.

For a behavior change of a single tenant, the time cooling algorithm may be used to weaken the influence of the tenant behavior in the past long time on the tenant label, and enhance the influence of the recent tenant behavior on the tenant label. Specifically, the determining a time decay weight coefficient of the any candidate cloud disk behavior label may include:
determining popularity of the candidate cloud disk behavior label at the current time based on popularity of the candidate cloud disk behavior label at a previous historical time, a preset cooling coefficient, and a time interval between the previous historical time and the current time; and
determining the time decay weight coefficient of the candidate cloud disk behavior label at the current time based on a time decay weight coefficient of the candidate cloud disk behavior label at the previous historical time, the popularity of the candidate cloud disk behavior label at the current time, and a current number of the candidate cloud disk behavior label.
${t}_{cur} = {t}_{before} ∗ {e}^{- c ∗ t}$ ${w}_{t} = {w}_{0} ∗ {t}_{cur} ∗ T$
where:
*t_{cur}*: representing the popularity of any candidate cloud disk behavior label at the current time, which is obtained through an operation based on the popularity *t_{before}* of the candidate cloud disk behavior label at the previous historical time, a cooling coefficient *c*, and the interval time *t*; and
*wₜ*: the time decay weight coefficient, which is obtained through an operation based on the time decay weight coefficient *w*₀ of the candidate cloud disk behavior label at the previous historical time, the popularity *t_{cur}* at the current time, and the current number *T* of the candidate cloud disk behavior label in the interval time *t*.

In summary, the formula for the current weight of the candidate cloud disk behavior label may be obtained as follows:
$w = {w}_{k} ∗ {w}_{TF - IDF} ∗ {w}_{t}$
where *wₖ* is the preset weight of the candidate cloud disk behavior label.

It should be noted that in this embodiment, the sequence of executing S301 and S302 is not limited.

On the basis of any of the foregoing embodiments, the determining a target cloud disk behavior label of the target tenant from the candidate cloud disk behavior label set may further include:

filtering an associated label group from the candidate cloud disk behavior label set based on a preset associated label set, where the preset associated label set includes a plurality of associated label groups each composed of mutually associated cloud disk behavior labels; and
for each filtered associated label group, retaining only one cloud disk behavior label in the filtered associated label group for label deduplication.

In this embodiment, considering that there may be some indicators with a high correlation, an excessively high correlation between labels may lead to duplicated label weights, reducing the accuracy when the labels are used. Therefore, the preset associated label set may be obtained in advance, where the preset associated label set includes a plurality of associated label groups each composed of mutually associated cloud disk behavior labels. Further, the associated label group may be filtered from the candidate cloud disk behavior label set of the target tenant based on the preset associated label set. For example, in the preset associated label set, a label A and a label B form an associated label group. When the label A and the label B are filtered from the candidate cloud disk behavior label set of the target tenant, a deduplication operation may be performed. That is, for each filtered associated label group, only one label in the filtered associated label group is retained for label deduplication. Only the label A may be retained, or only the label B may be retained.

Optionally, before the filtering an associated label group from the candidate cloud disk behavior label set based on a preset associated label set, the method further includes:
acquiring candidate cloud disk behavior label sets of a plurality of tenants, and constructing a co-occurrence matrix of candidate cloud disk behavior labels based on the candidate cloud disk behavior label sets of the plurality of tenants;
acquiring similarities between co-occurring candidate cloud disk behavior labels in the co-occurrence matrix, and determining any two candidate cloud disk behavior labels as an associated label group in response to the similarity between the any two candidate cloud disk behavior labels exceeding a preset similarity threshold; and
constructing the preset associated label set based on the determined associated label group.

In this embodiment, to analyze the correlation between the labels, the co-occurrence matrix of the labels is constructed to calculate the similarity between the labels. Co-occurrence here means that the labels appear at the same time, that is, a tenant is labeled a label B while being labeled a label A. When many tenants are labeled the label A and the label B at the same time, there may be a potential correlation between the label A and the label B. After the co-occurrence matrix of the labels is constructed, the similarity between the co-occurring candidate cloud disk behavior labels in the co-occurrence matrix is acquired. For example, the cosine similarity function is used to calculate the correlation between every two labels. The cosine similarity function uses a cosine value of an included angle between two vectors in the space to measure a size of the difference between two individuals. The closer the cosine value is to 1, the greater the similarity between the two vectors. For example, a high bandwidth label is labeled on a tenants, and a burst label is labeled on b tenants, where x tenants have both the high bandwidth label and the burst label. Therefore, the similarity between the high bandwidth and the burst is r:
$r = \frac{x}{\sqrt{a ∗ b}}$

The label correlation analysis may assist in making an operation decision, and analyzing the association between the labels may also assist in feature selection, eliminating duplicated features of the tenant, and facilitating tenant clustering.

For example, during block storage cluster scheduling, two dimensions, namely, the capacity and the number of segments, need to be considered. Because the segment is the smallest unit that constitutes the cloud disk, generally, a cluster that uses more capacity also has a larger number of segments. However, in terms of the architecture design, a single segment has a minimum capacity limit. When a large number of cloud disks that are smaller than the minimum capacity of the single segment exist in a cluster, a deviation between the number of segments and a capacity water level of the cluster may occur. Whether the two dimensions need to be considered at the same time during cluster scheduling may be determined through the label association calculation.

On the basis of any of the foregoing embodiments, for the labels that distinguish high and low levels, such as the capacity and traffic, it is expected that the total number of labels of each level does not differ too much. Therefore, the preset indicator threshold of each level may be adjusted to balance the number of labels of each level. The specific process is as follows:
determining the number of labels of each level in a case where the labels of different levels are divided based on the preset indicator threshold; and
correcting the preset indicator threshold based on the number of labels of each level, to balance the number of labels of each level.

In this embodiment, a difference value between the number of labels of each level and an average value may be calculated by using the following algorithm:
$d = \frac{\left|x-\frac{N}{3}\right|}{\frac{N}{3}}$
where x is the number of labels in any one of the high, medium, and low dimensions, and N is the total number of such labels. When the difference value d is greater than a critical value, the preset indicator threshold is triggered to be corrected. After the preset indicator threshold is corrected, the corresponding label may be re-obtained, to balance the number of labels of each level.

On the basis of any one of the foregoing embodiments, the method may further determine whether the generated labeled feature information of the target tenant fluctuates. Specifically, fluctuation status of the labeled feature information of the target tenant may be first determined, and in response to the fluctuation status being abnormal, an alarm is given.

Specifically, the target cloud disk behavior label of the target tenant may be vectorized to obtain a label feature vector of the target tenant. Further, label feature vectors of the target tenant at different times within a current time window may be acquired. The fluctuation status of the labeled feature information of the target tenant is determined based on the label feature vectors of the target tenant at the different times. In response to the fluctuation status being abnormal, an alarm is given.

In this embodiment, considering that tenant behavior is relatively stable and does not fluctuate greatly, the tenant labeled feature information does not change frequently. Therefore, in this embodiment, the fluctuation status of the labeled feature information of the target tenant may be evaluated, and an abnormality is found to give an alarm. Specifically, the label feature vector of the target tenant is constructed based on the target cloud disk behavior label of the target tenant in the foregoing embodiment, the label feature vectors of the target tenant at the different times within the current time window (for example, the last 15 days) may be acquired, and the fluctuation status of the labeled feature information of the target tenant is determined based on the label feature vectors of the target tenant at the different times. For example, the fluctuation status of the labeled feature information of the target tenant may be measured by using any feasible manner such as variance calculation. In response to the fluctuation status being abnormal, for example, exceeding a preset fluctuation status threshold, it indicates that the labeled feature information changes frequently, and an alarm may be triggered. The abnormality may be manually excluded. For example, the labeled feature information may be corrected, or the method for generating the labeled feature information or the method for generating the labels may be optimized, to improve the accuracy of the labeled feature information and reduce fluctuations.

On the basis of any one of the foregoing embodiments, considering that each tenant may have massive target cloud disk behavior labels, it is difficult to find a pattern from the massive target cloud disk behavior labels and accurately determine the labeled feature information of a single tenant. Therefore, in this embodiment, tenant labels of a plurality of tenants may be clustered to find commonalities between the tenants, and then the labeled feature information of similar tenants may be summarized, which is more reasonable and more accurate than the labeled feature information of a single tenant. Specifically, as shown in Fig. 3, the generating labeled feature information of the target tenant based on the target cloud disk behavior label according to S203 may include:
constructing a label feature vector based on all target cloud disk behavior labels of the target tenant;
performing clustering on label feature vectors of different tenants to obtain different tenant categories, and determining a center point of each tenant category and a preset number of target cloud disk behavior labels closest to the center point of each tenant category; and
acquiring label descriptions of the preset number of target cloud disk behavior labels closest to the center point of each tenant category, as labeled feature information of each tenant category.

In this embodiment, for each tenant, all target cloud disk behavior labels of the tenant are constructed into a multidimensional vector. Therefore, the tenant may be regarded as a point in a multidimensional vector space, and then vectors of different tenants are clustered. Any clustering algorithm such as the K-means may be used as the clustering method. Through clustering, similar tenants may be grouped into one tenant category. The center point of each tenant category may be determined, and then a preset number of target cloud disk behavior labels closest to the center point of each tenant category may be determined (for example, determining which label dimension's coordinate axis the center point is closer to). It may be determined that these target cloud disk behavior labels have a greater correlation with the tenant category and are more in line with the tenant category. These target cloud disk behavior labels may be labeled to obtain the labeled feature information of this type of tenant category.

Corresponding to the resource scheduling method based on an elastic block storage service in the foregoing embodiments, Fig. 4 is a block diagram of a resource scheduling device based on an elastic block storage service according to an embodiment of the present disclosure. For ease of description, only parts related to the embodiments of the present disclosure are shown. Referring to Fig. 4, the resource scheduling device based on an elastic block storage service 400 includes: an acquisition unit 401, a label generation unit 402, a feature information generation unit 403, and a scheduling unit 404.

The acquisition unit 401 is configured to acquire attribute information and operation event information of each cloud disk of a target tenant in a tenant set.

The label generation unit 402 is configured to generate a candidate cloud disk behavior label set of the target tenant based on the attribute information and the operation event information of each cloud disk; and determine a current weight of each candidate cloud disk behavior label in the candidate cloud disk behavior label set based on a cloud disk behavior change of the target tenant and cloud disk behavior changes of the other tenants in the tenant set, and determine a target cloud disk behavior label of the target tenant from the candidate cloud disk behavior label set based on the current weight of each candidate cloud disk behavior label.

The feature information generation unit 403 is configured to generate labeled feature information of the target tenant based on the target cloud disk behavior label.

The scheduling unit 404 is configured to schedule a cloud disk of the target tenant based on the labeled feature information of the target tenant.

According to one or more embodiments of the present disclosure, the label generation unit 402, when determining the current weight of each candidate cloud disk behavior label in the candidate cloud disk behavior label set based on the cloud disk behavior change of the target tenant and the cloud disk behavior changes of the other tenants in the tenant set, is configured to:
determine a real-time correlation coefficient between any candidate cloud disk behavior label in the candidate cloud disk behavior label set and the target tenant, based on target cloud disk behavior labels of all the tenants in the tenant set;
determine a time decay characteristic coefficient of the any candidate cloud disk behavior label based on the cloud disk behavior change of the target tenant; and
determine the current weight of the any candidate cloud disk behavior label based on the real-time correlation coefficient and the time decay characteristic coefficient.

According to one or more embodiments of the present disclosure, the label generation unit 402, when determining the current weight of the any candidate cloud disk behavior label based on the real-time correlation coefficient and the time decay characteristic coefficient, is configured to:
acquire a preset initial weight of the any candidate cloud disk behavior label; and
update the preset initial weight based on the real-time correlation coefficient and the time decay characteristic coefficient, to obtain the current weight of the any candidate cloud disk behavior label.

According to one or more embodiments of the present disclosure, the label generation unit 402, when determining the real-time correlation coefficient between any candidate cloud disk behavior label in the candidate cloud disk behavior label set and the target tenant based on the target cloud disk behavior labels of all the tenants in the tenant set, is configured to:
determine a frequency of occurrence of the any candidate cloud disk behavior label in the candidate cloud disk behavior label set, as a term frequency of the any candidate cloud disk behavior label;
determine a reciprocal of a frequency of occurrence of the any candidate cloud disk behavior label in the target cloud disk behavior labels of all the tenants in the tenant set, as an inverse document frequency of the any candidate cloud disk behavior label; and
determine, by using a term frequency-inverse document frequency method, the real-time correlation coefficient between the any candidate cloud disk behavior label and the target tenant based on the term frequency and the inverse document frequency of the any candidate cloud disk behavior label.

According to one or more embodiments of the present disclosure, the label generation unit 402, when generating the candidate cloud disk behavior label set of the target tenant based on the attribute information and the operation event information of each cloud disk, is configured to:
generate a single-cloud-disk behavior label corresponding to each cloud disk based on the attribute information and the operation event information of each cloud disk, and generate a multi-cloud-disk behavior label of the target tenant based on the single-cloud-disk behavior label corresponding to each cloud disk; and/or
generate a tenant feature label of the target tenant based on the attribute information and the operation event information of each cloud disk; and
determine the tenant feature label and/or the multi-cloud-disk behavior label as a candidate cloud disk behavior label of the target tenant, to constitute the candidate cloud disk behavior label set.

According to one or more embodiments of the present disclosure, the label generation unit 402, when generating the single-cloud-disk behavior label corresponding to each cloud disk based on the attribute information and the operation event information of each cloud disk, is configured to:
acquire, based on the attribute information and/or the operation event information of each cloud disk, a cumulative amount of a preset cloud disk behavior indicator of each cloud disk within a target time window, and determine the single-cloud-disk behavior label corresponding to each cloud disk based on the cumulative amount of the preset cloud disk behavior indicator; and/or
the label generation unit 402, when generating the tenant feature label of the target tenant based on the attribute information and the operation event information of each cloud disk, is configured to:
acquire, based on the attribute information and/or the operation event information of all the cloud disks of the target tenant, a cumulative amount of a preset tenant characteristic indicator of the target tenant within a target time window, and determine the tenant feature label of the target tenant based on the cumulative amount of the preset tenant characteristic indicator.

According to one or more embodiments of the present disclosure, the label generation unit 402, when generating the single-cloud-disk behavior label corresponding to each cloud disk based on the attribute information and the operation event information of each cloud disk, is configured to:
determine whether the attribute information and/or the operation event information of any cloud disk meet a first preset rule corresponding to the single-cloud-disk behavior label, and in response to meeting the first preset rule, generate the single-cloud-disk behavior label for the any cloud disk; and/or
the label generation unit 402, when generating the tenant feature label of the target tenant based on the attribute information and the operation event information of each cloud disk, is configured to:
determine whether the attribute information and/or the operation event information of all the cloud disks of the target tenant meet a second preset rule corresponding to the tenant feature label, and in response to meeting the second preset rule, generate the tenant feature label for the target tenant.

According to one or more embodiments of the present disclosure, the first preset rule and/or the second preset rule are rules for determining whether a related rule indicator exceeds a corresponding preset indicator threshold; and
correspondingly, the label generation unit 402 is further configured to:
determine an adjustment amount of the preset indicator threshold based on a total resource amount, a used resource amount, and a predicted resource usage amount of the cluster to which the cloud disk of the target tenant belongs, and adjust the preset indicator threshold based on the adjustment amount.

According to one or more embodiments of the present disclosure, the label generation unit 402, when generating the single-cloud-disk behavior label corresponding to each cloud disk based on the attribute information and the operation event information of each cloud disk, is configured to:
acquire historical data of a to-be-predicted cloud disk behavior indicator of each cloud disk within a historical time window based on the attribute information and/or the operation event information of each cloud disk, invoke a prediction model based on time-series historical data of the to-be-predicted cloud disk behavior indicator, acquire a predicted value of the to-be-predicted cloud disk behavior indicator, and determine the single-cloud-disk behavior label of each cloud disk based on the predicted value of the to-be-predicted cloud disk behavior indicator; and/or
the label generation unit 402, when generating the tenant feature label of the target tenant based on the attribute information and the operation event information of each cloud disk, is configured to:
acquire historical data of a to-be-predicted tenant characteristic indicator of the target tenant within a historical time window based on the attribute information and/or the operation event information of all the cloud disks of the target tenant, invoke a prediction model based on the historical data of the to-be-predicted tenant characteristic indicator, acquire a predicted value of the to-be-predicted tenant characteristic indicator, and determine the tenant feature label of the target tenant based on the predicted value of the to-be-predicted tenant characteristic indicator.

According to one or more embodiments of the present disclosure, the label generation unit 402, when determining the target cloud disk behavior label of the target tenant from the candidate cloud disk behavior label set, is configured to:
filter an associated label group from the candidate cloud disk behavior label set based on a preset associated label set, where the preset associated label set includes a plurality of associated label groups each composed of mutually associated cloud disk behavior labels; and
for each filtered associated label group, retain only one cloud disk behavior label in the filtered associated label group for label deduplication.

According to one or more embodiments of the present disclosure, the label generation unit 402, before filtering the associated label group from the candidate cloud disk behavior label set based on the preset associated label set, is further configured to:
acquire candidate cloud disk behavior label sets of a plurality of tenants, and construct a co-occurrence matrix of candidate cloud disk behavior labels based on the candidate cloud disk behavior label sets of the plurality of tenants;
acquire similarities between co-occurring candidate cloud disk behavior labels in the co-occurrence matrix, and determine any two candidate cloud disk behavior labels as an associated label group in response to a similarity between the any two candidate cloud disk behavior labels exceeding a preset similarity threshold; and
construct the preset associated label set based on the determined associated label group.

According to one or more embodiments of the present disclosure, the feature information generation unit 404 is further configured to:
determine fluctuation status of the labeled feature information of the target tenant, and give an alarm in response to the fluctuation status being abnormal.

The device provided in this embodiment may be used to perform the technical solutions of the above method embodiments. The implementation principles and technical effects of the method and the device are similar, and details are not described herein again in this embodiment.

To implement the foregoing embodiments, an embodiment of the present disclosure further provides an electronic device.

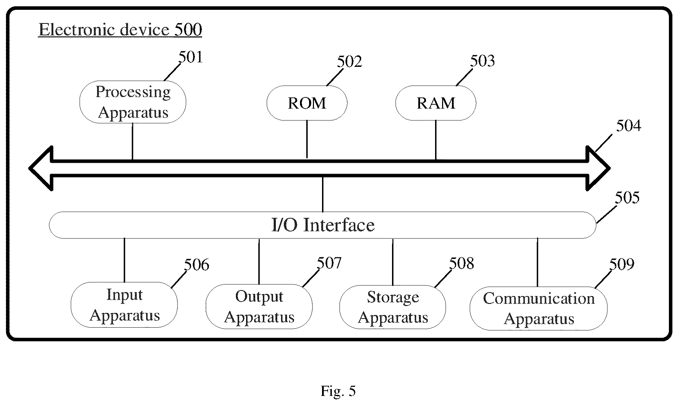

Fig. 5 is a schematic diagram of a structure of an electronic device 500 suitable for implementing an embodiment of the present disclosure. The electronic device 500 may be a terminal device or a server. The terminal device may include, but is not limited to, mobile terminals such as a mobile phone, a notebook computer, a digital broadcast receiver, a personal digital assistant (PDA), a tablet computer, a portable media player (PMP), and a vehicle-mounted terminal (such as a vehicle navigation terminal), and fixed terminals such as a digital TV and a desktop computer. The electronic device shown in Fig. 5 is merely an example, and shall not impose any limitation on the functions and the scope of use of the embodiments of the present disclosure.

As shown in Fig. 5, the electronic device 500 may include a processing apparatus (such as a central processing unit and a graphics processor) 501. The processing apparatus 501 may perform various appropriate actions and processing based on a program stored in a read-only memory (ROM) 502 or a program loaded from a storage apparatus 508 into a random access memory (RAM) 503. The RAM 503 further stores various programs and data required for operations of the electronic device 500. The processing apparatus 501, the ROM 502, and the RAM 503 are interconnected by using a bus 504. An input/output (I/O) interface 505 is also connected to the bus 504.

Usually, the following apparatuses may be connected to the I/O interface 505: an input apparatus 506 such as a touch screen, a touchpad, a keyboard, a mouse, a camera, a microphone, an accelerometer, and a gyroscope; an output apparatus 507 such as a liquid crystal display (LCD), a speaker, and a vibrator; the storage apparatus 508 such as a magnetic tape and a hard disk; and a communication apparatus 509. The communication apparatus 509 may allow the electronic device 500 to be in wireless or wired communication with other devices to exchange data. Although Fig. 5 shows the electronic device 500 having various apparatuses, it should be understood that it is not required to implement or provide all the apparatuses shown. More or fewer apparatuses may be implemented or provided alternatively.

In particular, according to the embodiments of the present disclosure, the process described above with reference to the flowchart may be implemented as a computer software program. For example, an embodiment of the present disclosure includes a computer program product, including a computer program carried on a computer-readable medium, where the computer program includes program code for performing the method shown in the flowchart. In such an embodiment, the computer program may be downloaded from a network and installed through the communication apparatus 509, or may be installed from the storage apparatus 508, or may be installed from the ROM 502. When the computer program is executed by the processing apparatus 501, the foregoing functions defined in the method of the embodiment of the present disclosure are performed.

It should be noted that the foregoing computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that includes or stores a program, and the program may be used by or used in combination with an instruction execution system, apparatus, or device. In the present disclosure, the computer-readable signal medium may include a data signal propagated on a baseband or as a part of a carrier, and computer-readable program code is carried in the data signal. The data signal propagated in this manner may be in a plurality of forms, and includes but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including but not limited to, a wire, an optical cable, a radio frequency (RF), or any suitable combination thereof.

The foregoing computer-readable medium may be included in the foregoing electronic device, or may exist alone without being assembled into the electronic device.

The foregoing computer-readable medium carries one or more programs, and when the one or more programs are executed by the electronic device, the electronic device is enabled to perform the method shown in the foregoing embodiments.

Computer program code for performing operations of the present disclosure may be written in one or more programming languages or a combination thereof, where the programming languages include object-oriented programming languages such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or a server. In the case involving the remote computer, the remote computer may be connected to the computer of the user through any type of network, including a local area network (LAN) or a wide area network (WAN), or may be connected to an external computer (for example, connected through the Internet with the aid of an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, a program segment, or a portion of code that includes one or more executable instructions for implementing a specified logical function. It should also be noted that, in some alternative implementations, functions indicated in the blocks may occur in an order different from that indicated in the drawings. For example, two blocks shown in succession may, in fact, be executed substantially concurrently, or the blocks may sometimes be executed in a reverse order, depending upon the functionality involved. It also should be noted that each block of the block diagrams and/or flowchart, and a combination of blocks in the block diagrams and/or flowchart may be implemented in a special purpose hardware-based system that perform a specified function or operation, or may be implemented in a combination of special purpose hardware and a computer instruction.

The involved units described in the embodiments of the present disclosure may be implemented by software or may be implemented by hardware. The name of a unit does not constitute a limitation on the unit itself in some cases.

The foregoing functions described herein may be performed, at least in part, by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), and the like.

One or more embodiments of the present disclosure provide a resource scheduling method based on an elastic block storage service. The method includes:
acquiring attribute information and operation event information of each cloud disk of a target tenant in a tenant set;
generating a candidate cloud disk behavior label set of the target tenant based on the attribute information and the operation event information of each cloud disk;
determining a current weight of each candidate cloud disk behavior label in the candidate cloud disk behavior label set based on a cloud disk behavior change of the target tenant and cloud disk behavior changes of the other tenants in the tenant set, and determining a target cloud disk behavior label of the target tenant from the candidate cloud disk behavior label set based on the current weight of each candidate cloud disk behavior label; generating labeled feature information of the target tenant based on the target cloud disk behavior label; and
scheduling a cloud disk of the target tenant based on the labeled feature information of the target tenant.

According to one or more embodiments of the present disclosure, the determining a current weight of each candidate cloud disk behavior label in the candidate cloud disk behavior label set based on a cloud disk behavior change of the target tenant and cloud disk behavior changes of the other tenants in the tenant set includes:
determining a real-time correlation coefficient between any candidate cloud disk behavior label in the candidate cloud disk behavior label set and the target tenant, based on target cloud disk behavior labels of all the tenants in the tenant set;
determining a time decay characteristic coefficient of the any candidate cloud disk behavior label based on the cloud disk behavior change of the target tenant; and
determining the current weight of the any candidate cloud disk behavior label based on the real-time correlation coefficient and the time decay characteristic coefficient.

According to one or more embodiments of the present disclosure, the determining the current weight of the any candidate cloud disk behavior label based on the real-time correlation coefficient and the time decay characteristic coefficient includes:
acquiring a preset initial weight of the any candidate cloud disk behavior label; and
updating the preset initial weight based on the real-time correlation coefficient and the time decay characteristic coefficient, to obtain the current weight of the any candidate cloud disk behavior label.

According to one or more embodiments of the present disclosure, the determining a real-time correlation coefficient between any candidate cloud disk behavior label in the candidate cloud disk behavior label set and the target tenant based on target cloud disk behavior labels of all the tenants in the tenant set includes:
determining a frequency of occurrence of the any candidate cloud disk behavior label in the candidate cloud disk behavior label set, as a term frequency of the any candidate cloud disk behavior label;
determining a reciprocal of a frequency of occurrence of the any candidate cloud disk behavior label in the target cloud disk behavior labels of all the tenants in the tenant set, as an inverse document frequency of the any candidate cloud disk behavior label; and
determining, by using a term frequency-inverse document frequency method, the real-time correlation coefficient between the any candidate cloud disk behavior label and the target tenant based on the term frequency and the inverse document frequency of the any candidate cloud disk behavior label.

According to one or more embodiments of the present disclosure, the generating a candidate cloud disk behavior label set of the target tenant based on the attribute information and the operation event information of each cloud disk includes:
generating a single-cloud-disk behavior label corresponding to each cloud disk based on the attribute information and the operation event information of each cloud disk, and generating a multi-cloud-disk behavior label of the target tenant based on the single-cloud-disk behavior label corresponding to each cloud disk; and/or
generating a tenant feature label of the target tenant based on the attribute information and the operation event information of each cloud disk; and
determining the tenant feature label and/or the multi-cloud-disk behavior label as a candidate cloud disk behavior label of the target tenant, to constitute the candidate cloud disk behavior label set.

According to one or more embodiments of the present disclosure, the generating a single-cloud-disk behavior label corresponding to each cloud disk based on the attribute information and the operation event information of each cloud disk includes:
acquiring, based on the attribute information and/or the operation event information of each cloud disk, a cumulative amount of a preset cloud disk behavior indicator of each cloud disk within a target time window, and determining the single-cloud-disk behavior label corresponding to each cloud disk based on the cumulative amount of the preset cloud disk behavior indicator; and/or
the generating a tenant feature label of the target tenant based on the attribute information and the operation event information of each cloud disk includes:
acquiring, based on the attribute information and/or the operation event information of all the cloud disks of the target tenant, a cumulative amount of a preset tenant characteristic indicator of the target tenant within a target time window, and determining the tenant feature label of the target tenant based on the cumulative amount of the preset tenant characteristic indicator.

According to one or more embodiments of the present disclosure, the generating a single-cloud-disk behavior label corresponding to each cloud disk based on the attribute information and the operation event information of each cloud disk includes:
determining whether the attribute information and/or the operation event information of any cloud disk meet a first preset rule corresponding to the single-cloud-disk behavior label, and in response to meeting the first preset rule, generating the single-cloud-disk behavior label for the any cloud disk; and/or
the generating a tenant feature label of the target tenant based on the attribute information and the operation event information of each cloud disk includes:
determining whether the attribute information and/or the operation event information of all the cloud disks of the target tenant meet a second preset rule corresponding to the tenant feature label, and in response to meeting the second preset rule, generating the tenant feature label for the target tenant.

According to one or more embodiments of the present disclosure, the first preset rule and/or the second preset rule are rules for determining whether a related rule indicator exceeds a corresponding preset indicator threshold; and
correspondingly, the method further includes:
determining an adjustment amount of the preset indicator threshold based on a total resource amount, a used resource amount, and a predicted resource usage amount of the cluster to which the cloud disk of the target tenant belongs, and adjusting the preset indicator threshold based on the adjustment amount.

According to one or more embodiments of the present disclosure, the generating a single-cloud-disk behavior label corresponding to each cloud disk based on the attribute information and the operation event information of each cloud disk includes:
acquiring historical data of a to-be-predicted cloud disk behavior indicator of each cloud disk within a historical time window based on the attribute information and/or the operation event information of each cloud disk, invoking a prediction model based on time-series historical data of the to-be-predicted cloud disk behavior indicator, acquiring a predicted value of the to-be-predicted cloud disk behavior indicator, and determining the single-cloud-disk behavior label of each cloud disk based on the predicted value of the to-be-predicted cloud disk behavior indicator; and/or
the generating a tenant feature label of the target tenant based on the attribute information and the operation event information of each cloud disk includes:
acquiring historical data of a to-be-predicted tenant characteristic indicator of the target tenant within a historical time window based on the attribute information and/or the operation event information of all the cloud disks of the target tenant, invoking a prediction model based on the historical data of the to-be-predicted tenant characteristic indicator, acquiring a predicted value of the to-be-predicted tenant characteristic indicator, and determining the tenant feature label of the target tenant based on the predicted value of the to-be-predicted tenant characteristic indicator.

According to one or more embodiments of the present disclosure, the determining a target cloud disk behavior label of the target tenant from the candidate cloud disk behavior label set includes:
filtering an associated label group from the candidate cloud disk behavior label set based on a preset associated label set, where the preset associated label set includes a plurality of associated label groups each composed of mutually associated cloud disk behavior labels; and
for each filtered associated label group, retaining only one cloud disk behavior label in the filtered associated label group for label deduplication.

According to one or more embodiments of the present disclosure, before the screening an associated label group from the candidate cloud disk behavior label set based on a preset associated label set, the method further includes:
acquiring candidate cloud disk behavior label sets of a plurality of tenants, and constructing a co-occurrence matrix of candidate cloud disk behavior labels based on the candidate cloud disk behavior label sets of the plurality of tenants;
acquiring similarities between co-occurring candidate cloud disk behavior labels in the co-occurrence matrix, and determining any two candidate cloud disk behavior labels as an associated label group in response to a similarity between the any two candidate cloud disk behavior labels exceeding a preset similarity threshold; and
constructing the preset associated label set based on the determined associated label group.

According to one or more embodiments of the present disclosure, the method further includes:
determining fluctuation status of the labeled feature information of the target tenant, and giving an alarm in response to the fluctuation status being abnormal.

One or more embodiments of the present disclosure provide a resource scheduling device based on an elastic block storage service. The device includes:
an acquisition unit configured to acquire attribute information and operation event information of each cloud disk of a target tenant in a tenant set;
a label generation unit configured to generate a candidate cloud disk behavior label set of the target tenant based on the attribute information and the operation event information of each cloud disk; and determine a current weight of each candidate cloud disk behavior label in the candidate cloud disk behavior label set based on a cloud disk behavior change of the target tenant and cloud disk behavior changes of the other tenants in the tenant set, and determine a target cloud disk behavior label of the target tenant from the candidate cloud disk behavior label set based on the current weight of each candidate cloud disk behavior label;
a feature information generation unit configured to generate labeled feature information of the target tenant based on the target cloud disk behavior label; and
a scheduling unit configured to schedule a cloud disk of the target tenant based on the labeled feature information of the target tenant.

According to one or more embodiments of the present disclosure, the label generation unit, when determining the current weight of each candidate cloud disk behavior label in the candidate cloud disk behavior label set based on a cloud disk behavior change of the target tenant and cloud disk behavior changes of the other tenants in the tenant set, is configured to:
determine a real-time correlation coefficient between any candidate cloud disk behavior label in the candidate cloud disk behavior label set and the target tenant, based on target cloud disk behavior labels of all the tenants in the tenant set;
determine a time decay characteristic coefficient of the any candidate cloud disk behavior label based on the cloud disk behavior change of the target tenant; and
determine the current weight of the any candidate cloud disk behavior label based on the real-time correlation coefficient and the time decay characteristic coefficient.

According to one or more embodiments of the present disclosure, the label generation unit, when determining the current weight of the any candidate cloud disk behavior label based on the real-time correlation coefficient and the time decay characteristic coefficient, is configured to:
acquire a preset initial weight of the any candidate cloud disk behavior label; and
update the preset initial weight based on the real-time correlation coefficient and the time decay characteristic coefficient, to obtain the current weight of the any candidate cloud disk behavior label.

According to one or more embodiments of the present disclosure, the label generation unit, when determining the real-time correlation coefficient between any candidate cloud disk behavior label in the candidate cloud disk behavior label set and the target tenant based on the target cloud disk behavior labels of all the tenants in the tenant set, is configured to:
determine a frequency of occurrence of the any candidate cloud disk behavior label in the candidate cloud disk behavior label set, as a term frequency of the any candidate cloud disk behavior label;
determine a reciprocal of a frequency of occurrence of the any candidate cloud disk behavior label in the target cloud disk behavior labels of all the tenants in the tenant set, as an inverse document frequency of the any candidate cloud disk behavior label; and
determine, by using a term frequency-inverse document frequency method, the real-time correlation coefficient between the any candidate cloud disk behavior label and the target tenant based on the term frequency and the inverse document frequency of the any candidate cloud disk behavior label.

According to one or more embodiments of the present disclosure, the label generation unit, when generating the candidate cloud disk behavior label set of the target tenant based on the attribute information and the operation event information of each cloud disk, is configured to:
generate a single-cloud-disk behavior label corresponding to each cloud disk based on the attribute information and the operation event information of each cloud disk, and generate a multi-cloud-disk behavior label of the target tenant based on the single-cloud-disk behavior label corresponding to each cloud disk; and/or
generate a tenant feature label of the target tenant based on the attribute information and the operation event information of each cloud disk; and
determine the tenant feature label and/or the multi-cloud-disk behavior label as a candidate cloud disk behavior label of the target tenant, to constitute the candidate cloud disk behavior label set.

According to one or more embodiments of the present disclosure, the label generation unit, when generating the single-cloud-disk behavior label corresponding to each cloud disk based on the attribute information and the operation event information of each cloud disk, is configured to:
acquire, based on the attribute information and/or the operation event information of each cloud disk, a cumulative amount of a preset cloud disk behavior indicator of each cloud disk within a target time window, and determine the single-cloud-disk behavior label corresponding to each cloud disk based on the cumulative amount of the preset cloud disk behavior indicator; and/or
the label generation unit, when generating the tenant feature label of the target tenant based on the attribute information and the operation event information of each cloud disk, is configured to:
acquire, based on the attribute information and/or the operation event information of all the cloud disks of the target tenant, a cumulative amount of a preset tenant characteristic indicator of the target tenant within a target time window, and determine the tenant feature label of the target tenant based on the cumulative amount of the preset tenant characteristic indicator.

According to one or more embodiments of the present disclosure, the label generation unit, when generating the single-cloud-disk behavior label corresponding to each cloud disk based on the attribute information and the operation event information of each cloud disk, is configured to:
determine whether the attribute information and/or the operation event information of any cloud disk meet a first preset rule corresponding to the single-cloud-disk behavior label, and in response to meeting the first preset rule, generate the single-cloud-disk behavior label for the any cloud disk; and/or
the label generation unit, when generating the tenant feature label of the target tenant based on the attribute information and the operation event information of each cloud disk, is configured to:
determine whether the attribute information and/or the operation event information of all the cloud disks of the target tenant meet a second preset rule corresponding to the tenant feature label, and in response to meeting the second preset rule, generate the tenant feature label for the target tenant.

According to one or more embodiments of the present disclosure, the first preset rule and/or the second preset rule are rules for determining whether a related rule indicator exceeds a corresponding preset indicator threshold; and
correspondingly, the label generation unit is further configured to:
determine an adjustment amount of the preset indicator threshold based on a total resource amount, a used resource amount, and a predicted resource usage amount of the cluster to which the cloud disk of the target tenant belongs, and adjust the preset indicator threshold based on the adjustment amount.

According to one or more embodiments of the present disclosure, the label generation unit, when generating the single-cloud-disk behavior label corresponding to each cloud disk based on the attribute information and the operation event information of each cloud disk, is configured to:
acquire historical data of a to-be-predicted cloud disk behavior indicator of each cloud disk within a historical time window based on the attribute information and/or the operation event information of each cloud disk, invoke a prediction model based on time-series historical data of the to-be-predicted cloud disk behavior indicator, acquire a predicted value of the to-be-predicted cloud disk behavior indicator, and determine the single-cloud-disk behavior label of each cloud disk based on the predicted value of the to-be-predicted cloud disk behavior indicator; and/or
the label generation unit, when generating the tenant feature label of the target tenant based on the attribute information and the operation event information of each cloud disk, is configured to:
acquire historical data of a to-be-predicted tenant characteristic indicator of the target tenant within a historical time window based on the attribute information and/or the operation event information of all the cloud disks of the target tenant, invoke a prediction model based on the historical data of the to-be-predicted tenant characteristic indicator, acquire a predicted value of the to-be-predicted tenant characteristic indicator, and determine the tenant feature label of the target tenant based on the predicted value of the to-be-predicted tenant characteristic indicator.

According to one or more embodiments of the present disclosure, the label generation unit, when determining the target cloud disk behavior label of the target tenant from the candidate cloud disk behavior label set, is configured to:
filter an associated label group from the candidate cloud disk behavior label set based on a preset associated label set, where the preset associated label set includes a plurality of groups of associated label groups each including associated cloud disk behavior labels; and
for each filtered associated label group, retain only one cloud disk behavior label in the filtered associated label group for label deduplication.

According to one or more embodiments of the present disclosure, the label generation unit, before filtering the associated label group from the candidate cloud disk behavior label set based on the preset associated label set, is further configured to:
acquire candidate cloud disk behavior label sets of a plurality of tenants, and construct a co-occurrence matrix of candidate cloud disk behavior labels based on the candidate cloud disk behavior label sets of the plurality of tenants;
acquire similarities between co-occurring candidate cloud disk behavior labels in the co-occurrence matrix, and determine any two candidate cloud disk behavior labels as an associated label group in response to a similarity between the any two candidate cloud disk behavior labels exceeding a preset similarity threshold; and
construct the preset associated label set based on the determined associated label group.

According to one or more embodiments of the present disclosure, the feature information generation unit is further configured to:
determine fluctuation status of the labeled feature information of the target tenant, and give an alarm in response to the fluctuation status being abnormal.

One or more embodiments of the present disclosure provide an electronic device. The electronic device includes at least one processor and at least one memory.

The at least one memory stores a computer-executable instruction.

The at least one processor executes the computer-executable instruction stored in the at least one memory, to enable the at least one processor to perform the resource scheduling method based on an elastic block storage service according to at least one of the above embodiments.

One or more embodiments of the present disclosure provide a non-transitory computer-readable storage medium. The non-transitory computer-readable storage medium stores a computer-executable instruction. When the computer-executable instruction is executed by a processor, the resource scheduling method based on an elastic block storage service according to at least one of the above embodiments is implemented.

One or more embodiments of the present disclosure provide a computer program product, including a computer program. When the computer program is executed by a processor, the resource scheduling method based on an elastic block storage service according to at least one of the above embodiments is implemented.

The above description illustrates merely preferred embodiments of the present disclosure and explanations of the applied technical principles. Those skilled in the art should understand that the scope of disclosure involved in the present disclosure is not limited to the technical solutions formed by specific combinations of the above technical features, and shall also cover other technical solutions formed by any combination of the above technical features or equivalent features thereof without departing from the above concept of disclosure. For example, a technical solution formed by a replacement of the above features with technical features with similar functions disclosed in the present disclosure (but not limited thereto) also falls within the scope of the present disclosure.

In addition, although the various operations are depicted in a specific order, it should not be understood as requiring these operations to be performed in the specific order shown or in a sequential order. Under specific circumstances, multitasking and parallel processing may be advantageous. Similarly, although the above discussion contains a plurality of specific implementation details, these details should not be construed as limiting the scope of the present disclosure. Some features that are described in the context of separate embodiments may alternatively be implemented in combination in a single embodiment. In contrast, various features described in the context of a single embodiment may alternatively be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A resource scheduling method based on an elastic block storage service, comprising:
acquiring attribute information and operation event information of each cloud disk of a first tenant in a tenant set (S201);
generating a candidate cloud disk behavior label set of the first tenant based on the attribute information and the operation event information of each cloud disk (S202);
determining a current weight of each candidate cloud disk behavior label in the candidate cloud disk behavior label set based on a cloud disk behavior change of the first tenant and cloud disk behavior changes of other tenants in the tenant set other than the first tenant, and determining a first cloud disk behavior label of the first tenant from the candidate cloud disk behavior label set based on the current weight of each candidate cloud disk behavior label; generating labeled feature information of the first tenant based on the first cloud disk behavior label (S203); and
scheduling a cloud disk of the first tenant based on the labeled feature information of the first tenant (S204).

2. The method of claim 1, wherein the determining a current weight of each candidate cloud disk behavior label in the candidate cloud disk behavior label set based on a cloud disk behavior change of the first tenant and cloud disk behavior changes of other tenants in the tenant set other than the first tenant comprises:
determining a real-time correlation coefficient between a first candidate cloud disk behavior label in the candidate cloud disk behavior label set and the first tenant, based on first cloud disk behavior labels of all tenants in the tenant set (S301);
determining a time decay characteristic coefficient of the first candidate cloud disk behavior label based on the cloud disk behavior change of the first tenant (S302); and
determining the current weight of the first candidate cloud disk behavior label based on the real-time correlation coefficient and the time decay characteristic coefficient (S303).

3. The method of claim 2, wherein the determining the current weight of the first candidate cloud disk behavior label based on the real-time correlation coefficient and the time decay characteristic coefficient comprises:
acquiring a preset initial weight of the first candidate cloud disk behavior label; and
updating the preset initial weight based on the real-time correlation coefficient and the time decay characteristic coefficient, to obtain the current weight of the first candidate cloud disk behavior label.

4. The method of claim 2, wherein the determining a real-time correlation coefficient between a first candidate cloud disk behavior label in the candidate cloud disk behavior label set and the first tenant, based on first cloud disk behavior labels of all tenants in the tenant set comprises:
determining a frequency of occurrence of the first candidate cloud disk behavior label in the candidate cloud disk behavior label set, as a term frequency of the first candidate cloud disk behavior label;
determining a reciprocal of a frequency of occurrence of the first candidate cloud disk behavior label in the first cloud disk behavior labels of all the tenants in the tenant set, as an inverse document frequency of the first candidate cloud disk behavior label; and
determining, by using a term frequency-inverse document frequency method, the real-time correlation coefficient between the first candidate cloud disk behavior label and the first tenant based on the term frequency and the inverse document frequency of the first candidate cloud disk behavior label.

5. The method of any of claims 1 to 4, wherein the generating a candidate cloud disk behavior label set of the first tenant based on the attribute information and the operation event information of each cloud disk comprises:
generating a single-cloud-disk behavior label corresponding to each cloud disk based on the attribute information and the operation event information of each cloud disk, and generating a multi-cloud-disk behavior label of the first tenant based on the single-cloud-disk behavior label corresponding to each cloud disk; and/or
generating a tenant feature label of the first tenant based on the attribute information and the operation event information of each cloud disk; and
determining at least one selected from a group consisting of the tenant feature label and the multi-cloud-disk behavior label as a candidate cloud disk behavior label of the first tenant, to constitute the candidate cloud disk behavior label set.

6. The method of claim 5, wherein the generating a single-cloud-disk behavior label corresponding to each cloud disk based on the attribute information and the operation event information of each cloud disk comprises:
acquiring, based on at least one selected from a group consisting of the attribute information and the operation event information of each cloud disk, a cumulative amount of a preset cloud disk behavior indicator of each cloud disk within a first time window, and determining the single-cloud-disk behavior label corresponding to each cloud disk based on the cumulative amount of the preset cloud disk behavior indicator; and/or
the generating a tenant feature label of the first tenant based on the attribute information and the operation event information of each cloud disk comprises:
acquiring, based on at least one selected from a group consisting of the attribute information and the operation event information of all cloud disks of the first tenant, a cumulative amount of a preset tenant characteristic indicator of the first tenant within a first time window, and determining the tenant feature label of the first tenant based on the cumulative amount of the preset tenant characteristic indicator.

7. The method of claim 5, wherein the generating a single-cloud-disk behavior label corresponding to each cloud disk based on the attribute information and the operation event information of each cloud disk comprises:
determining whether at least one selected from a group consisting of the attribute information and the operation event information of a first cloud disk among all cloud disks of the first tenant meet a first preset rule corresponding to the single-cloud-disk behavior label, and in response to meeting the first preset rule, generating the single-cloud-disk behavior label for the first cloud disk; and/or
the generating a tenant feature label of the first tenant based on the attribute information and the operation event information of each cloud disk comprises:
determining whether at least one selected from a group consisting of the attribute information and the operation event information of all cloud disks of the first tenant meet a second preset rule corresponding to the tenant feature label, and in response to meeting the second preset rule, generating the tenant feature label for the first tenant.

8. The method of claim 7, wherein at least one selected from a group consisting of the first preset rule and the second preset rule are rules for determining whether a related rule indicator exceeds a corresponding preset indicator threshold; and
the method further comprises:
determining an adjustment amount of the preset indicator threshold based on a total resource amount, a used resource amount, and a predicted resource usage amount of a cluster to which the cloud disk of the first tenant belongs, and adjusting the preset indicator threshold based on the adjustment amount.

9. The method of claim 5, wherein the generating a single-cloud-disk behavior label corresponding to each cloud disk based on the attribute information and the operation event information of each cloud disk comprises:
acquiring historical data of a to-be-predicted cloud disk behavior indicator of each cloud disk within a historical time window based on at least one selected from a group consisting of the attribute information and the operation event information of each cloud disk, invoking a prediction model based on time-series historical data of the to-be-predicted cloud disk behavior indicator, acquiring a predicted value of the to-be-predicted cloud disk behavior indicator, and determining the single-cloud-disk behavior label of each cloud disk based on the predicted value of the to-be-predicted cloud disk behavior indicator; and/or
the generating a tenant feature label of the first tenant based on the attribute information and the operation event information of each cloud disk comprises:
acquiring historical data of a to-be-predicted tenant characteristic indicator of the first tenant within a historical time window based on at least one selected from a group consisting of the attribute information and the operation event information of all cloud disks of the first tenant, invoking a prediction model based on the historical data of the to-be-predicted tenant characteristic indicator, acquiring a predicted value of the to-be-predicted tenant characteristic indicator, and determining the tenant feature label of the first tenant based on the predicted value of the to-be-predicted tenant characteristic indicator.

10. The method of any of claims 1 to 4, wherein the determining a first cloud disk behavior label of the first tenant from the candidate cloud disk behavior label set comprises:
filtering an associated label group from the candidate cloud disk behavior label set based on a preset associated label set, wherein the preset associated label set comprises a plurality of associated label groups each composed of mutually associated cloud disk behavior labels; and
for each filtered associated label group, retaining only one cloud disk behavior label in the filtered associated label group for label deduplication.

11. The method of claim 10, wherein before the filtering an associated label group from the candidate cloud disk behavior label set based on a preset associated label set, the method further comprises:
acquiring candidate cloud disk behavior label sets of a plurality of tenants, and constructing a co-occurrence matrix of candidate cloud disk behavior labels based on the candidate cloud disk behavior label sets of the plurality of tenants;
acquiring similarities between co-occurring candidate cloud disk behavior labels in the co-occurrence matrix, and determining any two candidate cloud disk behavior labels as an associated label group in response to a similarity between the any two candidate cloud disk behavior labels exceeding a preset similarity threshold; and
constructing the preset associated label set based on the associated label group that is determined.

12. The method of claim 1, further comprising:
determining fluctuation status of the labeled feature information of the first tenant, and giving an alarm in response to the fluctuation status being abnormal.

13. An electronic device, comprising: at least one processor and at least one memory,
wherein the at least one memory stores a computer-executable instruction; and
the at least one processor executes the computer-executable instruction stored in the at least one memory, to enable the at least one processor to perform the method of any one of claims 1 to 12.

14. A non-transitory computer-readable storage medium, storing a computer-executable instruction, wherein the non-transitory computer-executable instruction, when executed by a processor, implements the method of any one of claims 1 to 12.
